(19) Europäisches Patentamt

European Patent Office

Office européen des brevets

(11) **EP 0 913 752 A2**

(12) **EUROPÄISCHE PATENTANMELDUNG**

(43) Veröffentlichungstag:
06.05.1999 Patentblatt 1999/18

(51) Int. Cl.⁶: $G05F\ 1/20$

(21) Anmeldenummer: 98117033.5

(22) Anmeldetag: 09.09.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 29.10.1997 DE 19747712

(71) Anmelder:
MASCHINENFABRIK REINHAUSEN GmbH
93059 Regensburg (DE)

(72) Erfinder:
• Dohnal, Dieter, Dr. Ing.
93138 Lappersdorf (DE)
• Lessmann-Mieske, Hans-Henning, Dipl.-Ing.
93073 Neutraubling (DE)

(54) **Anordnung eines Stufenschalters an einem Stufentransformator**

(57) Die Erfindung betrifft eine Anordnung eines Stufenschalters an einem Stufentransformator zur Konstanthaltung der einem Verbraucher zugeführten Versorgungsspannung in Energieverteilungsnetzen bzw. -systemen. Erfindungsgemäß erfolgt die Regelung dabei ausschließlich auf der als Stufenwicklung ausgebildeten Primärseite des Stufentransformators. Dazu ist die Stufenwicklung in unterschiedliche Wicklungsteile unterteilt, die nach einem näher beschriebenen Modus separat miteinander kombinierbar sind. Dadurch kann auch bei in weiten Grenzen schwankender Versorgungsspannung eine konstante Spannung auf der Sekundärseite erreicht werden.

Fig. 1

EP 0 913 752 A2

**Beschreibung**

Die Erfindung betrifft eine Anordnung eines Stufenschalters an einem Stufentransformator zur Konstanthaltung der einem Verbraucher zugeben Versorgungsspannung in Energieverteilungsnetzen bzw. -systemen.

Es ist bekannt, in Energieverteilungsnetzen bzw. -Systemen, die aus einzelnen Sammelschienen mit jeweils strahlenförmigen Abzweigungen bzw. Verteilungen bestehen, möglichst nahe am Verbraucher oder einer Gruppe von Verbrauchern spezielle Stufenschalter, sogenannte "Voltage regulator" vorzusehen, die dem angeschlossenen Verbraucher eine möglichst konstante Spannung liefern. Dieser spezielle Stufenschalter muß also einerseits die Spannungsabfälle in den Leitungen ausgleichen, zum anderen soll er auch Spannungsänderungen durch unterschiedliche Netzbelastung ausgleichen.

In neuerer Zeit besteht auch verstärkt das Bedürfnis, darüber hinaus auch gelegentlich auftretende kurzzeitige Spannungseinbrüche, sogenannte "Voltage sags" ausgleichen. Solche "Voltage sags" werden durch bestimmte Verbraucher im Netz, z.B. Motorantriebe, verursacht und sind ausgesprochen störend. Besonders stören sie an das jeweilige Netz angeschlossene elektronische Komponenten, Computer o.ä., die sehr sensibel auf Änderungen bzw. Schwankungen der Betriebsspannung reagieren.

Zu diesem Problem ist in der Firmenschrift "Static Electronic Tap-Changers Type LED" der ABB Components AB, SE, bereits ein Solid-State-Stufenschalter beschrieben, der mit Thyristoren als Schaltelementen, die an der mit Wicklungsanzaplungen versehenen Sekundärwicklung des Stufentransformators angeordnet sind, arbeitet. Dieser Stufenschalter soll eine schnelle Ausregelung der beschriebenen "Voltage sags" im Netz bereits nach der ersten Halbwelle ihres Auftretens ermöglichen.

Aus der WO 95/27931 sind verschiedene Ausführungsformen eines weiteren Stufenschalters zur unterbrechungslosen Lastumschaltung bekannt, wobei ebenfalls Thyristoren als Schaltelemente dienen. Mittels antiparallel geschalteter Thyristorpaare sind dabei unterschiedliche Wicklungteile einer Stufenwicklung als Teil der Sekundärwicklung des jeweiligen Stufentransformators zu- oder abschaltbar.

Zur Realisierung einer möglichst feinstufigen Spannungsregelung bei einer begrenzten Zahl von physisch vorhandenen Wicklungsanzapfungen der Stufenwicklung wird in dieser Schrift ferner ein als "Discrete Cycle Modulation" bezeichnetes Verfahren vorgeschlagen, durch das die Thyristorpaare derart angesteuert werden, daß sich Zwischenwerte der Sekundärspannung ergeben. Dieses Verfahren einer Regelung im Halbwellenbereich ist in der Schrift ausführlich dargestellt.

Bei diesem in zahlreichen Varianten offenbarten Stufenschalter mit seiner spezifischen Anordnung unterschiedlicher Wicklungsgruppen ergibt sich ein Stromfluß, der sich aus dem jeweiligen Laststrom und dem Magnetisierungsstrom zusammensetzt, wobei letzterer um 90 Grad phasenversetzt als reiner Blindstrom auftritt. Der Anteil des Magnetisierungsstromes ist dabei in den einzelnen Wicklungsgruppen unterschiedlich, was ein nichtsynchrones Schalten dieser Wicklungsgruppen verursacht.

Aufgabe der Erfindung ist es, eine gattungsgemäße Anordnung eines Stufenschalters an einem Stufentransformator anzugeben, die ein derartiges Regelverhalten aufweist, daß die Sekundärspannung, die einem Verbraucher zugeführt wird, stets konstant gehalten wird und dem Sollwert von 100 % entspricht und die gleichzeitig einen solchen schaltungstechnischen Aufbau aufweist, daß stets eine konstante Induktion auftritt und damit eine Minimierung der Kerngröße des Stufentransformators möglich ist.

Diese Aufgabe wird durch eine erfindungsgemäße Anordnung mit den Merkmalen des ersten Patentanspruchs gelöst.

Besonders vorteilhaft an der erfindungsgemäßen Anordnung ist, daß die Regelung ausschließlich an der Primärseite des Stufentransformators erfolgt, derart, daß die Spannung an der Sekundärseite, unabhängig von Netzschwankungen oder sonstigen Spannungsabweichungen der Eingangsseite, also der Primärseite, stets konstant ist.

Vorteilhaft bei der erfindungsgemäßen Anordnung ist weiterhin, daß auch bei variabler Eingangsspannung eine konstante Induktion am Stufentransformator auftritt.

Zwar ist es aus dem IEEE-Dokument C57.15-1986 und der Firmenschrift "Voltage Regulators" der Cooper Power Systems, Inc., US, bereits an sich bekannt, daß sowohl die Primär- als auch die Sekundärwicklung eines Transformators als Regel- d.h. Stufenwicklung ausgeführt werden kann und mit einem Stufenschalter in Verbindung stehen kann, die erfindungsgemäße Anordnung in der Gesamtheit ihrer Merkmale ist dadurch jedoch nicht nahegelegt.

Die erfindungsgemäße Anordnung soll nachfolgend anhand von Zeichnungen beispielhaft noch näher erläutert werden.

Es zeigen:

Fig. 1      ein Schaltbild einer erfindungsgemäßen Anordnung

Fig. 2      eine Tabelle der einzelnen Schaltsequenzen, d.h. derjenigen Thyristorpaare, die jeweils bei prozentual von der konstant zu haltenden Sekundärspannung abweichender Primärspannung geschaltet sind

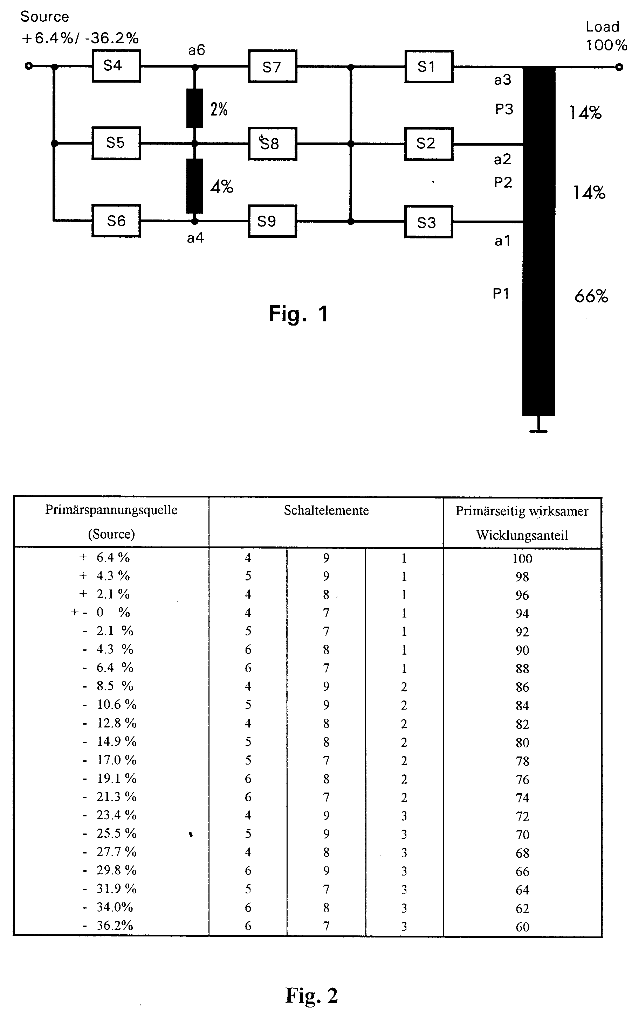

Die in Fig. 1 dargestellte Anordnung weist einen Stufentransformator nach Art eines Spartransformators auf Der Abgriff der Sekundärspannung erfolgt dabei am Punkt "Load". Die Wicklung besteht aus fünf einzelnen Wicklungsteilen P1 ... P5.

Setzt man die Gesamtwicklungszahl dieser Wicklung mit 100 % an, so weist der erste Wicklungsteil P1 66 %, der zweite Wicklungsteil P2 14 %, der dritte Wicklungsteil P3 ebenfalls 14 %, der vierte Wicklungsteil P4 4 % und der fünfte Wicklungsteil P5 2 % davon auf Die Wicklungsteile P1, P2 und P3 sind hintereinandergeschaltet und weisen jeweils an ihren Enden Wicklungsanzapfungen a1 ... a 3 auf Die beiden Wicklungsteile P4 und P5 sind - galvanisch getrennt davon - ihrerseits ebenfalls elektrisch miteinander in Reihe geschaltet und weisen an ihren Enden und an der Verbindungsstelle dazwischen weitere Wicklungsanzapfungen a4 ... a6 auf.

Die Anordnung weist ferner insgesamt 9 Schaltelemente S1 ... S9 auf. Jedes Schaltelement, vorzugsweise ein antiparallel geschaltetes Thyristorpaar, ist separat und unabhängig von allen anderen ansteuer- d.h. betätigbar.

Drei Schaltelemente S1, S2, S3 sind jeweils mit einer der Wicklungsanzapfungen a1, a2, a3 einerseits und jeweils mit jedem von drei weiteren Schaltelemente S7, S8, S9 andererseits elektrisch verbunden.

Diese weiteren Schaltelemente S7, S8, S9 wiederum stehen an ihrer anderen Seite mit jeweils einer der weiteren Wicklungsanzapfungen a4, a5, a6 elektrisch in Verbindung. Von diesen weiteren Wicklungsanzapfüngen führt jeweils eine weitere elektrische Verbindung zu jeweils einer Seite der weiteren Schaltelemente S4, S5, S6, die ihrerseits mit jeweils ihrer anderen Seite mit der Primärspannungsquelle (Source) jeweils elektrisch verbunden sind.

In der Grundstellung sind nur die Schaltelemente S4, S7 und S1 eingeschaltet, d.h. die jeweiligen Thyristorpaare gezündet, so daß die Netzspannung direkt am Sekundärkreis anliegt. Bei dieser Grundstellung liegt die 100 %-ige Netzspannung an 94 % der Gesamtwicklung, und im Wicklungskern wird die Nenninduktion erreicht. Dieser Wicklungsanteil von 94 % der Gesamtwicklung ist unveränderlich ständig im Sekundärkreis als Sekundärwicklung wirksam.

Bei von der Nennspannung abweichender Netzspannung werden die Wicklungteile P2, P3, P4, P5 in der Weise zu- oder abgeschaltet, daß die Windungsspannung und damit die Kerninduktion möglichst wenig von der Nenninduktion in der Grundstellung abweicht.

Durch beliebige Betätigung der Schaltelemente S1... S9 ist es nun möglich, bestimmte Wicklungsteile zu- oder abzuschalten und damit die jeweils elektrisch wirksame Primärwicklung aufbis zu 100 % zu erhöhen oder auch auf bis zu 66 % zu verringern.

In Fig. 2 ist eine Tabelle der möglichen Betätigungssequenzen der einzelnen Schaltelemente S1 ... S9 als Reaktion der Anordnung auf eine sich ändernde Spannung der Primärspannungsquelle (Source) gezeigt.

Der gesamte Sekundärkreis wird bei der Regelung nicht beeinflußt; die wirksame Sekundärwicklung von 94 % der Gesamtwicklung sowie die Spannung $U_{soll}$ am

Verbraucher bleiben - wie bereits erläutert - konstant.

Diese Ausregelung einer variablen Nennspannung mit dem Ziel einer konstanten Sekundärspannung kann in weiten Grenzen erfolgen:

Im einen Extremfall, bei dem die Regelung gerade noch greift, ist die Primärspannung um 36,2 % abgesunken; werden jetzt die Schaltelemente S6, S7 und S3 geschlossen, sind nur noch 60 % der Wicklung im Primärkreis wirksam und $U_{soll}$ auf der Sekundärseite bleibt konstant.

Im anderen Extremfall ist die Primärspannung auf 106,4 % angestiegen; werden jetzt die Schaltelemente S4, S9 und S1 betätigt, bleibt $U_{soll}$ ebenfalls konstant.

Der asymmetrische Regelbereich entspricht dabei den Erfordernissen der Praxis. Unerwünschte quasistationäre Überspannungen kommen nur sehr selten in den Energieverteilungsnetzen vor.

Dagegen sind Spannungseinbräche aller Art häufig, sowohl langsam abfallende Spannungen als auch die erwähnten Voltage sags sind möglich.

Die Erfindung ist nicht auf das vorstehend beschriebene Beispiel beschränkt.

Es ist natürlich auch möglich, andere Werte für die Aufteilung der Wicklung auf die beschriebenen 5 Wicklungsteile P1...P5 zu wählen. Dadurch ändern sich die im einzelnen erzielbaren Stufungen; sowohl der Grad der Feinstufigkeit der Regelung als auch der Regelbereich sind durch entsprechende Dimensionierungen einstellbar.

Besonders vorteilhaft ist es, die einzelnen Wicklungsteile P1...P5 nach folgender allgemeiner Bemessungsregel zu dimensionieren.

Wählt man für P5 einen prozentualen Wert x, bezogen auf die gesamte - 100 %ige - Wicklung, so ergeben sich danach folgende prozentuale Werte für die weiteren Wicklungsteile:

$$P4 = 2x$$

$$P3 = x + 2 (x + 2 x)$$

$$P2 = x + 2 (x + 2 x)$$

$$P1 = 100 - 14x.$$

Geht man, noch allgemeiner, von einer vorhandenen Anzahl von n Grobstufen aus, so ergibt sich

$$P1 = 100 - n (x + 2 (x + 2 x)).$$

Es ist im Rahmen der Erfindung weiterhin auch möglich, die Zahl der einzelnen Wicklungsteile zu verändern und deren Aufteilung auf die in Reihe geschaltete Gruppe, die stets in den Sekundärkreis geschaltet ist, einerseits sowie die übrigen, zu oder gegenschaltbaren Wicklungsteile andererseits zu variieren.

**Patentansprüche**

1. Anordnung eines Stufenschalters an einem nach Art eines Spartransformators ausgebildeten Stufentransformator,
dadurch gekennzeichnet,

daß eine Wicklung aus einzelnen Wicklungsteilen (P1...P5) besteht,
daß eine Gruppe von in Reihe geschalteten derartigen Wicklungsteilen (P1...P3) unveränderbar in den Sekundärkreis geschaltet ist und daß wahlweise mindestens ein weiteres Wicklungsteil (P4, P5) an mindestens ein Wicklungsteil (P1...P3) der Gruppe zu- bzw. gegenschaltbar ist und diese Kombination jeweils in den Primärkreis geschaltet ist.

2. Anordnung nach Patentanspruch 1,
dadurch gekennzeichnet,

daß die Wicklung aus fünf einzelnen Wicklungsteilen (P1...P5) besteht,
daß die Wicklungsteile (P1, P2 und P3) elektrisch in Reihe geschaltet die Gruppe bilden und jeweils an ihren Enden Wicklungsanzapfungen (a1, a2 und a3) aufweisen,
daß die beiden weiteren Wicklungsteile (P4 und P5) galvanisch davon getrennt ihrerseits ebenfalls elektrisch in Reihe geschaltet sind und an ihren Enden sowie an der Verbindungsstelle dazwischen weitere Wicklungsanzapfungen (a4, a5 und a6) aufweisen,
daß drei Schaltelemente (S1, S2 und S3) jeweils mit einer der Wicklungsanzapfungen (a1, a2 und a3) einerseits und jeweils mit jedem von drei weiteren Schaltelementen (S7, S8 und S9) andererseits elektrisch verbunden sind,
daß die weiteren Schaltelemente (S7, S8 und S9) wiederum an ihrer anderen Seite mit jeweils einer der weiteren Wicklungsanzapfungen (a4, a5 und a6) elektrisch in Verbindung stehen,
daß von diesen weiteren Wicklungsanzapfungen (a4, a5 und a6) jeweils eine weitere elektrische Verbindung zu jeweils einer Seite weiterer Schaltelemente (S4, S5 und S6) führt, die ihrerseits mit jeweils ihrer anderen Seite mit der Primärspannungsquelle jeweils elektrisch verbunden sind
und daß jedes der Schaltelemente (S1...S9) separat und unabhängig von allen anderen ansteuer- bzw. betätigbar ist.

3. Anordnung nach Patentanspruch 1 oder 2,
dadurch gekennzeichnet,

daß jedes der Schaltelemente (S1...S9) jeweils als antiparallel geschaltetes Thyristorpaar ausgebildet ist.

Source
+6.4%/ -36.2%

Load
100%

a6

S4          S7          S1
                                    a3

                                    P3          14%

        2%

S5          S8          S2
                                    a2

        4%                          P2          14%

S6          S9          S3
a4                                  a1


                                    P1          66%

**Fig. 1**

| Primärspannungsquelle (Source) | Schaltelemente | | | Primärseitig wirksamer Wicklungsanteil |
|---|---|---|---|---|
| + 6.4 % | 4 | 9 | 1 | 100 |
| + 4.3 % | 5 | 9 | 1 | 98 |
| + 2.1 % | 4 | 8 | 1 | 96 |
| + - 0 % | 4 | 7 | 1 | 94 |
| - 2.1 % | 5 | 7 | 1 | 92 |
| - 4.3 % | 6 | 8 | 1 | 90 |
| - 6.4 % | 6 | 7 | 1 | 88 |
| - 8.5 % | 4 | 9 | 2 | 86 |
| - 10.6 % | 5 | 9 | 2 | 84 |
| - 12.8 % | 4 | 8 | 2 | 82 |
| - 14.9 % | 5 | 8 | 2 | 80 |
| - 17.0 % | 5 | 7 | 2 | 78 |
| - 19.1 % | 6 | 8 | 2 | 76 |
| - 21.3 % | 6 | 7 | 2 | 74 |
| - 23.4 % | 4 | 9 | 3 | 72 |
| - 25.5 % | 5 | 9 | 3 | 70 |
| - 27.7 % | 4 | 8 | 3 | 68 |
| - 29.8 % | 6 | 9 | 3 | 66 |
| - 31.9 % | 5 | 7 | 3 | 64 |
| - 34.0% | 6 | 8 | 3 | 62 |
| - 36.2% | 6 | 7 | 3 | 60 |

**Fig. 2**

5